# EUROPÄISCHE PATENTANMELDUNG

(11) **EP 2 495 545 A2**
(43) Veröffentlichungstag der Anmeldung: **05.09.2012**
(21) Anmeldenummer: 12000699.4
(22) Anmeldetag: 02.02.2012
(51) Int. Cl.: G01N 9/24, G01N 3/317

(54) **Verfahren zur Ermittlung der Porosität von Schichten und Verwendung des Verfahrens zur Bestimmung der Haftzugfestigkeit**

(30) Priorität: 03.03.2011 DE 102011005074
(71) Anmelder: Linde Aktiengesellschaft, 80331 Munich (DE)
(72) Erfinder: Bachmann, Benjamin-Leon, 81375 München (DE); Heinrich, Peter, 82110 Germering (DE); Krömmer, Werner, 84034 Landshut (DE); Zierhut, Jochen, Dr., 81739 München (DE)

(57) **Zusammenfassung**

Verfahren zur Ermittlung der Porosität einer auf ein Substrat (1) aufgebrachten Schicht (2), wobei an der Schichtoberfläche (4) und/oder an der der Schicht abgewandten Substratoberfläche (3) eine Druckwelle erzeugt und der reflektierte und/oder der transmittierte Anteil dieser Druckwelle detektiert wird. Das erfindungsgemäße Verfahren kann verwendet werden, die Haftzugfestigkeit zu ermitteln.

## Beschreibung

Die vorliegende Erfindung betrifft ein Verfahren zur Ermittlung der Porosität einer auf ein Substrat aufgebrachten Schicht. Insbesondere geeignet ist das Verfahren zur Ermittlung der Porosität bei thermisch gespritzten oder bei geklebten Schichten.

Ist die Rauhigkeit (Porosität) einer Schicht bekannt, kann mittels des Spannungsintensitätsfaktors (auch k-Faktor genannt) aus der Porosität auch die Haftzugfestigkeit der Schicht berechnet werden.

Die Porosität und die daraus abgeleitete Haftzugfestigkeit (manchmal auch als Haftfestigkeit bezeichnet) ist eine der wichtigsten technologischen und physikalischen Eigenschaften von auf ein Substrat aufgebrachten Schichten, insbesondere wenn die Schichten hinsichtlich ihrer Haftzugfestigkeit verglichen werden sollen. Die Werte der Haftzugfestigkeit stellen für den Konstrukteur ein wichtiges Kriterium dafür dar, wo und wann welche Art von Schichten eingesetzt werden können. Insbesondere bei thermisch gespritzten Schichten wird dieses Kriterium zur Festlegung herangezogen, welche Werkstoffe und/oder welche Spritzverfahren gegebene Anforderungen an die Haftzugfestigkeit erfüllen.

Spritzverfahren, wie Flamm-, Plasma- und Kaltgasspritzen sind aus dem Stand der Technik zur Herstellung von Beschichtungen bekannt. Beim Flammspritzen wird ein pulver-, schnur-, stab- oder drahtförmiger Beschichtungswerkstoff in einer Brenngasflamme erhitzt und unter Zuführung zusätzlichen Trägergases, beispielsweise Druckluft, mit hoher Geschwindigkeit auf einen Grundwerkstoff gespritzt. Beim Plasmaspritzen wird in einen Plasmajet Pulver eingedüst, das durch die hohe Plasmatemperatur aufgeschmolzen wird. Der Plasmastrom reißt die Pulverteilchen mit und schleudert sie auf das zu beschichtende Werkstück.

Beim Kaltgasspritzen, wie es beispielsweise in der EP 0 484 533 B1 beschrieben ist, werden die Spritzpartikel in einem vergleichsweise kalten Trägergas auf hohe Geschwindigkeiten beschleunigt. Die Temperatur des Trägergases beträgt wenige gespritzten Komponente. Die Beschichtung wird mit dem Auftreffen der Partikel auf das Metallband oder Bauteil mit hoher kinetischer Energie gebildet, wobei die Partikel, die in dem kalten Trägergas nicht schmelzen, beim Aufprall eine dichte und festhaftende Schicht bilden. Die plastische Verformung und die daraus resultierende lokale Wärmefreigabe sorgen dabei für eine sehr gute Kohäsion und Haftung der Spritzschicht auf dem Werkstück. Aufgrund der relativ niedrigen Temperaturen und der Möglichkeit, Argon oder andere Inertgase als Trägergas zu nutzen, lassen sich Oxidation und/oder Phasenumwandlungen des Beschichtungswerkstoffes beim Kaltgasspritzen vermeiden. Die Spritzpartikel werden als Pulver, in der Regel mit einer Partikelgröße von 1 bis 100 µm, zugegeben. Die hohe kinetische Energie erhalten die Spritzpartikel bei der Entspannung des Trägergases in einer Laval-Düse.

Haftzugfestigkeitsuntersuchungen werden auch bei thermisch gespritzten Schichten derzeit meist mittels Zugprobenversuchen durchgeführt ("Stirnzugversuch"). Nachdem die Schicht auf ein Substrat aufgebracht wurde, wird eine Vielzahl kleiner Zylinder mit ihrer Stirnfläche auf die Schicht geklebt. Nach Trocknung des Klebers werden die aufgebrachten Zylinder von der Probe abgezogen. Die hierfür notwendige Zugkraft wird gemessen. Aus dem Verhältnis von gemessener Zugkraft und Stirnfläche des Zylinders ergibt sich der Wert der Haftzugfestigkeit der Schicht auf dem Substrat. Die Bestimmung der Haftzugfestigkeit ist in der Norm DIN EN 582 "Ermittlung der Haftzugfestigkeit" beschrieben und die Vorgehensweise zu ihrer Bestimmung dort festgelegt.

Bei der Beurteilung der ermittelten Werte der Haftzugfestigkeit sind der mögliche Einfluss des Klebers und die Vorgehensweise beim Kleben der Proben zu berücksichtigen. Mit Rücksicht auf die Festigkeit des Klebers sind die Angaben für Höchstwerte bei 70 MPa begrenzt. Eine höhere Haftzugfestigkeit ist also möglich und bei bestimmten Spritzverfahren auch zu erwarten.

Weitere Fehlerquellen bei der bekannten Haftzugfestigkeitsermittlung mittels "Stirnzugversuch" sind unsaubere Zylinderfläche, Winkel und/oder Lageversatz zwischen Probenteil und Abziehkörper, Parameter bei der Vorgehensweise des Stirnzugversuchs und Beschädigung der Spritzschicht durch unsachgemäße Nachbehandlung. Bei der Bestimmung der Haftzugfestigkeit speziell von oxidischen Schichten ist zu berücksichtigen, dass vor Aufbringen der Deckschicht üblicherweise eine Haftschicht auf das Substrat gespritzt wird. Dadurch kommt es zu einer Verlagerung der Schwachzone zwischen Schicht und Substrat hin zu dem Bereich zwischen Haft- und Deckschicht.

Die geschilderte Methode zur Ermittlung der Haftzugfestigkeit von Schichten ist somit mit mehreren Nachteilen und Fehlerquellen behaftet. Des Weiteren zerstört diese Art der Messung immer auch die Probe.

Eine weitere wichtige physikalische Eigenschaft einer auf ein Substrat aufgebrachten Schicht ist die Porosität, aus der, wie eingangs bereits erwähnt, auch die Haftzugfestigkeit berechnet werden kann. Beispielsweise sollten Wärmedämmschichten eine hohe Porosität aufweisen, da die vom Schichtmaterial eingeschlossene Luft geringe Wärmeleitfähigkeit besitzt, bei anderen Anwendungen, wie Korrosionsschutz oder elektrische Isolierung, ist hingegen ein geringer Grad an Porosität gewünscht. Zur Messung der Porosität stehen verschiedene Messmethoden zur Verfügung, von denen im Folgenden einige beschrieben sein werden.

Bei der Quecksilberporosimetrie wird die Porenvolumenverteilung (offene Porosität) und die spezifische Oberfläche von porösen Feststoffen anhand der Messung des unter steigendem Druck eingepressten Quecksilbervolumens bestimmt. Das Verfahren ist nur bei nicht benetzbaren und nicht mit Quecksilber reagierenden Stoffen anwendbar. Andere Feststoffe müssen vorher durch Überziehen mit einem geeigneten Material aufbereitet werden. Das Verfahren ist bei leicht zusammendrückbaren Stoffen und bei solchen, deren geschlossene Poren aufbrechen können, aufgrund der bei der Messung auftretenden Drücke nur bedingt anwendbar. Nähere Einzelheiten zu diesem Verfahren finden sich in der deutschen Norm DIN 66 133.

Ein weiteres Verfahren zur Bestimmung der Porengrößenverteilung und der spezifischen Oberfläche stellt das sogenannte Stickstoffsorptionsverfahren dar, bei dem die Stickstoff-Desorptionsisotherme bei der Siedetemperatur des Stickstoffs nach einem bestimmten Verfahren ausgewertet wird. Anstelle von Stickstoff können auch andere Gase, insbesondere Edelgas, eingesetzt werden. Anstelle der Desorptionisotherme kann auch die Adsorptionisotherme verwendet werden. Nähere Einzelheiten zu diesem Verfahren sind der deutschen Norm DIN 66 134 zu entnehmen.

Bei der Mikroporenanalyse mittels Gasadsorption können Poren mit einer Porenweite < 2nm gemessen werden. Voraussetzung für die Messung ist die Zugänglichkeit der Poren für das Messgas. Als Adsorptionsgase werden vorzugsweise Stickstoff, Argon oder Kohlendioxid verwendet. Zu Einzelheiten dieses Verfahrens, seiner Grundlagen sowie der hieraus möglichen Mikroporenvolumenbestimmung sei auf die deutsche Norm DIN 66 135 verwiesen.

Ein weiteres, für das thermische Beschichten übliches Verfahren zur Bestimmung der Porosität, stellt auch die optische Auswertung der materialographischen Schliffe dar. Damit lassen sich Porenvolumen, Porenanzahl, Porengröße, Porenform und - verteilung über die Spritzschichtendicke bestimmen (DVS Merkblatt 2301, Thermische Spritzverfahren für metallische und nichtmetallische Werkstoffe, Februar 2009, S.9 Prüfen der Spritzschichten). Um eine genaue Aussage über die Porosität treffen zu können müssen die Proben entsprechend dem DVS-Merkblatt 2301-1 präpariert werden.

Sämtliche bekannten Methoden zur Porositätsmessung haben die ungewünschte Begleiteigenschaft, dass im Falle von Schichten diese zumindest zum Teil zerstört werden müssen, beispielsweise um über einen Querschliff die Messung durchzuführen. Außerdem erfordern die bekannten Verfahren zeitaufwendige Vorbereitungen der Proben und in der Regel die Auswertung umfangreicher Messreihen.

Vor diesem Hintergrund besteht das Bedürfnis nach einem Verfahren zur Ermittlung einer Porosität und bei Bedarf der daraus resultierenden Haftzugfestigkeit von Schichten, insbesondere von thermisch gespritzten Schichten, das die oben genannten Nachteile überwindet.

Diese Aufgabe wird erfindungsgemäß durch die Merkmale des Anspruchs 1 gelöst. Eine erfindungsgemäße Verwendung ist in Anspruch 10 angegeben. Vorteilhafte Ausgestaltungen ergeben sich aus den jeweiligen Unteransprüchen und der nachfolgenden Beschreibung.

Erfindungsgemäß wird an der Schichtoberfläche und/oder an der der Schicht abgewandten Substratoberfläche (auch Substratunterseite genannt) eine Druckwelle erzeugt und der reflektierte und/oder der transmittierte Anteil dieser Druckwelle detektiert, um hieraus die Schichtfehlstellen (Poren, Korngrenzen, Risse) der auf dem Substrat aufgebrachten Schicht zu ermitteln. Wie weiter unten erläutert, lassen sich mit dem erfindungsgemäßen Verfahren Anzahl, Lage und Größe der Fehlstellen in einer Schicht sowie zwischen Schicht und Substrat ermitteln, da diese Fehlstellen zu einer Verzerrung des Druckwellensignals führen. Auf diese Weise erhält man ein Istsignal der detektierten Druckwelle, das mit dem Idealsignal einer Druckwelle verglichen werden kann, wie sie im Fall einer fehlerstellenfreien Schicht sowie fehlerstellenfreien Grenzfläche Schicht/Substrat entsteht. Aus diesem Vergleich lassen sich graduelle Angaben zur Porosität der Schicht machen. Je nach Anzahl und Verteilung der die reflektierte und/oder transmittierte Druckwelle detektierenden Sensoren lassen sich Aussagen über die Anzahl, die Lage und die Größe der Fehlstellen in einer bestimmten Genauigkeit treffen. Solche Angaben können bei den bisher bekannten Verfahren zur Porositätsmessung nicht getroffen werden. Anhand des Spannungsintensitätsfaktors lässt sich aus den gemessenen Fehlstellen ein Wert für die Haftzugfestigkeit ermitteln. Das hier zugrundeliegende mathematische Modell ist an sich bekannt.

Gute Ergebnisse lassen sich insbesondere durch Detektion des transmittierten Anteils der Druckwelle erzielen, so dass im Folgenden - ohne Beschränkung der Allgemeinheit - der Übersichtlichkeit halber nur diese Ausgestaltung der Erfindung erläutert werden soll. Je nach Substrat, insbesondere etwa bei beschichteten Rohren, kann es aufgrund der schlechten Zugänglichkeit des Rohrinneren jedoch sinnvoll sein, den reflektierten Anteil (anstelle des transmittierten Anteils) der Druckwelle zu detektieren. Sämtliche nachfolgend beschriebenen Mess- und Auswerteverfahren für den transmittierten Anteil einer Druckwelle sind in gleicher Weise für den reflektierten Anteil einer Druckwelle gültig.

Nach der Anregung beispielsweise an der (vom Substrat abgewandten) Schichtoberfläche breitet sich die Druckwelle im Inneren der Schicht aus. Grundsätzlich gilt, dass jede Störzone (Poren, Korngrenzen, Risse oder auch Grenzflächen) die Druckwelle beeinflusst. Im Folgenden wird, analog für alle Störzonen, anhand der Grenzfläche Schicht/ Substrat das Prinzip erläutert: Die Druckwelle gelangt nach der Anregung zur Grenzfläche Schicht/Substrat. Umgekehrt breitet sich nach Anregung an der Substratunterseite die Druckwelle im Inneren der Probe (oder genauer des Substrats) aus und gelangt dann ebenfalls zur Grenzfläche Schicht/Substrat. Je nach Eigenschaften des Substrats und der Schicht wird ein Teil der Druckwelle an dieser Grenzfläche reflektiert, ein anderer Teil transmittiert. Hiermit einhergehend kann es zu einer Änderung der Frequenz und der Wellenfront der Druckwelle kommen. Der nicht reflektierte, also transmittierte Anteil der Druckwelle, gelangt zur gegenüberliegenden Seite der Probe, also bei Anregung der Schichtoberfläche zur Substratunterseite und bei Anregung der Substratunterseite zur Schichtoberfläche. Dort kann der transmittierte Anteil der Druckwelle durch Anbringen von einem oder mehreren entsprechenden Sensoren insbesondere zeit- und ortsaufgelöst detektiert werden. Gleiche Betrachtungen können für den reflektierten Anteil der Druckwelle angestellt werden. Allgemein lässt sich sagen, dass das nach der anregenden Druckwelle detektierte Signal eine Superposition der Signale aller Störzonen (oder "Fehlstellen") im Schicht/ Substrat- Gefüge ist.

Vorteil der vorliegenden Erfindung ist, dass die relativ hohe Fehleranfälligkeit der eingangs geschilderten Methode zur Ermittlung der Haftzugfestigkeit und die bei dieser Methode notwendige Versuchsreihe zur Ermittlung eines durchschnittlichen Werts der Haftzugfestigkeit umgangen werden, und dass die geschilderte Ermittlung der Haftzugfestigkeit eine nicht invasive Methode darstellt, die die Probe nicht zerstört. Zudem liefert die Erfindung reproduzierbare Ergebnisse bei der Ermittlung der Porosität und Haftzugfestigkeit von Schichten.

Es ist vorteilhaft, wenn die Druckwelle mittels einer mechanischen Anregung oder mittels eines Laserpulses erzeugt wird. Als Druckwelle bezeichnet man akustische Wellen (Schallwellen) mit geringer bis mäßiger Amplitude und stetigem zeitlichem Druckverlauf einerseits sowie Stoßwellen andererseits, bei denen sich der Druck sprunghaft ändert und die Amplitude zumeist vergleichsweise groß ist. Zur Erzeugung von Stoßwellen ist es allgemein notwendig, eine Störung in das betreffende Material einzubringen, die sich schneller bewegt als die durch die Störung verursachten Schallwellen. Die erzeugten Stoßwellen klingen zu normalen Schallwellen ab, wenn ihre Energie vom umgebenden Material absorbiert wird. Zur Erzeugung einer Druckwelle mittels einer mechanischen Anregung kann ein entsprechendes piezoelektrisches Element eingesetzt werden, das bei Anlegen einer entsprechenden elektrischen Spannung die notwendige mechanische Anregung (durch Deformation) erzeugt. Eine Druckwelle kann auch durch einen Laserpuls erzeugt werden, wobei beim Auftreffen des Laserpulses auf das Material die Laserpulsenergie in kürzester Zeit vom Material aufgenommen werden muss, wodurch eine Druckwelle, meist Stoßwelle, ausgelöst wird. Hierbei ist es sinnvoll, Laserpulslängen im Nanosekundenbereich oder darunter zu verwenden, beispielsweise durch Einsatz von ns- oder sub-ns-Lasersystemen. Solche Systeme können Pulslängen zwischen 100f bis 7ns erzeugen und verwenden als laseraktives Medium Ti:Saphir (Al₂O₃), Yb:Yag oder Nd:Yag.

Zur Detektion des reflektierten und/oder transmittierten Anteils der Druckwelle ist es zweckmäßig, zumindest einen piezoelektrischen Sensor zu verwenden. Geeignet sind insbesondere piezoelektrische Keramiken auf der Basis von Bleizirkonat-Titanat (PZT), insbesondere "weiche" PZT-Keramiken wegen ihrer hohen Dynamik und somit hohen Zeit- und Ortsauflösung der Messung. Durch geeignete räumliche Anordnung von Sensoren und entsprechender Anzahl kann eine gute Ortsauflösung erzielt werden.

Neben Piezoelementen können auch andere Verfahren zur Detektion der Druckwellen verwendet werden. Mittels Interferometrie können Oberflächenbewegungen im Nanometerbereich und Nanosekundenbereich detektiert werden. Diese interferometrischen Verfahren sind in der Literatur bekannt. Insbesondere sind hier das Michelson-Interferometer und das VISAR (Velocity Interferometer System for Any Reflector) zu nennen. Mit letzterem lässt sich auch noch die Geschwindigkeitsänderung von Druckwellen detektieren.

Eine weitere Möglichkeit zur Detektion des reflektierten und/oder transmittierten Anteils der Druckwelle ist die Verwendung von Streak-Kameras (Schmierbild-Kameras), deren Prinzip an sich bekannt ist. Damit lässt sich die Druckwelle ortsaufgelöst entlang einer Dimension detektieren, da sich die Oberflächenreflektivität des Substrats oder der Schicht durch die Druckwelle ändert. Zeitliche Auflösungen bis in den Femtosekundenbereich sind damit realisierbar.

Zur Detektion des reflektierten und/oder transmittierten Anteils der Druckwelle ist es ebenfalls möglich Quartz Manometer zu verwenden. Die Funktionsweise dieser ist an sich ebenfalls bekannt.

Weitere bekannte Möglichkeiten zur Druckwellendetektion sind so genannte Manganin Gages, Slanted Resistance Wires und Magnetic Wire Gages.

Es ist denkbar, sowohl zur Detektion als auch zur Erzeugung der Druckwelle einen insbesondere piezoelektrischen Schallgeber zu verwenden. Zur Erzeugung der Druckwelle wird dann ein entsprechendes elektrisches Signal an den Schallgeber gelegt, während zur Detektion der reflektierten Druckwelle das durch die entsprechende Deformation der piezoelektrischen Keramik erzeugte Spannungssignal gemessen wird.

Es ist vorteilhaft, wenn eine räumliche und/oder zeitliche Detektion des detektierten Druckwellenanteils vorgenommen wird. Hierzu wird das erzeugte Druckwellensignal sowohl zeitlich als auch räumlich analysiert. Während sich aus der zeitlichen Veränderung des Druckwellensignals die Anzahl von Fehlstellen ermitteln lassen, können aus der räumlichen Veränderung des Druckwellensignals die Positionen und/oder Größen dieser Fehlstellen ermittelt werden.

Beispielsweise werden auf der Rückseite des Substrats (Substratunterseite) vier piezoelektrische Sensoren zueinander benachbart angeordnet, wobei die Anregung der Druckwelle in deren projiezierter Mitte stattfindet. Unmittelbar nach der Anregung detektieren die Sensoren, die sehr empfindlich auf mechanische Verformung reagieren, die Druckwelle. Erfolgt die Abtastung des Druckwellensignals ausreichend schnell, kann die Druckwelle sowohl zeitlich als auch räumlich erfasst werden. Bei einer hohen Haftzugfestigkeit ist die Schicht nahezu formschlüssig auf das Substrat aufgebracht. Damit kann bei gleichzeitiger minimaler Porosität der Schicht sich die Druckwelle ungehindert durch das Material bewegen und es ergibt sich ein homogenes Druckwellensignal an den Piezosensoren. Eine geringere Haftzugfestigkeit ist meist dadurch gekennzeichnet, dass die Schicht nicht mehr formschlüssig auf dem Substrat sitzt, sondern sich an der Grenzfläche Schicht/Substrat viele Fehlstellen befinden bzw. eine hohe Porosität besteht. Diese Fehlstellen, die schalltechnisch wie Hohlräume bzw. Poren betrachtet werden können, führen dazu, dass sich für die Ausbreitung der Druckwellen Störzonen ergeben. Den gleichen Effekt haben auch Fehlstellen innerhalb der Schicht. Jede Störzone führt zu Zwischenreflexionen der Druckwelle. Als Resultat erhält man ein zeitlich und räumlich verzerrtes Druckwellensignal. Über die zeitliche Veränderung lässt sich die Anzahl der Störzonen in Ausbreitungsrichtung der Druckwelle abschätzen, während sich über die räumliche Veränderung die Positionen und Größen der Fehlstellen abschätzen lassen.

Prinzipiell ist eine beliebige Anordnung der Einkopplung der Druckwelle sowie der Detektion derselbigen möglich, so dass abhängig von der Form des Substrats (ebenes oder gebogenes Blech, Rohr, Bauteil etc.) eine äußerst flexible Anordnung zur Ermittlung der Haftzugfestigkeit möglich ist.

Es hat sich gezeigt, dass die erfindungsgemäße Ermittlung der Porosität und der Haftzugfestigkeit insbesondere bei thermisch gespritzten Schichten geeignet ist, da sie dort im Vergleich zu bekannten Verfahren der Ermittlung dieser Eigenschaften besonders brauchbare und reproduzierbare Ergebnisse bringt.

Im Folgenden soll ein Ausführungsbeispiel die Erfindung und ihre Vorteile näher erläutern. Das Ausführungsbeispiel ist in der beigefügten Zeichnung dargestellt.

### Figurenbeschreibung

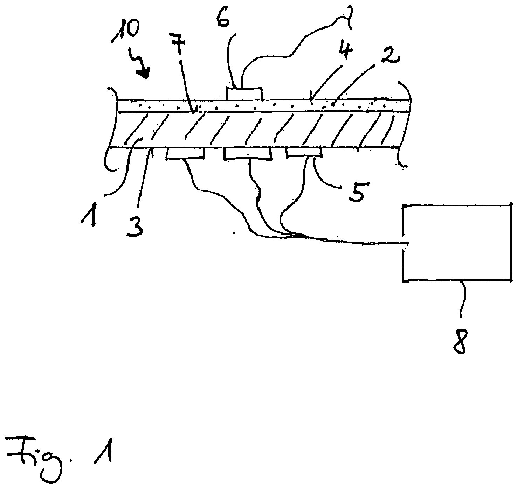

- Figur 1: zeigt sehr schematisch einen möglichen Aufbau zur erfindungsgemäßen Haftzugfestigkeitsermittlung.

Figur 1 zeigt eine allgemein mit 10 bezeichnete Probe bestehend aus einem Substrat 1 und einer darauf aufgebrachten Schicht 2. Bei dieser Schicht handelt es sich insbesondere um eine mittels eines thermischen Spritzverfahrens (z. B. Plasmaspritzen) aufgebrachte Schicht, die die Oberflächeneigenschaften des unbearbeiteten Substrats 1 wunschgemäß verändert bzw. verbessert.

Um die Haftzugfestigkeit der auf dem Substrat 1 befindlichen Schicht 2 zu ermitteln, ohne die Probe 10 zu zerstören, ist auf der Schichtoberfläche 4 ein Schallgeber 6 aufgebracht, der durch mechanische Anregung eine Druckwelle in der Probe 10 auslösen kann. Auf der Substratunterseite 3 befinden sich vier piezoelektrische Sensoren 5, die gleichmäßig um die Austrittsstelle der Druckwelle auf der Substratunterseite 3 angeordnet sind, so dass in Figur 1 nur drei der vier oder mehr piezoelektrischen Sensoren 5 sichtbar sind. Selbstverständlich kann auch mit einer geringeren Anzahl, insbesondere auch nur mit einem piezoelektrischen Sensor 5 gearbeitet werden. Eine größere Anzahl solcher Sensoren 5 bietet jedoch die Möglichkeit den transmittierten Druckwellenanteil räumlich ausreichend genau zu detektieren.

Da die Arbeitsweise piezoelektrischer Sensoren 5 ausreichend bekannt ist, wird hier nicht näher darauf eingegangen. Die Ausgangssignale der Sensoren 5 gelangen über entsprechende Leitungen in eine Auswerteeinheit 8, die nur schematisch dargestellt ist. Aus den Signalen der piezoelektrischen Sensoren 5 kann ein Druckwellensignal erzeugt werden, das in der Auswerteeinheit 8 räumlich und/oder zeitlich analysiert werden kann. Aus der räumlichen Analyse des veränderlichen Druckwellensignals können die Positionen und Größen etwaiger Fehlstellen in der Grenzfläche 7 zwischen Schicht 2 und Substrat 1 ermittelt werden. Aus der zeitlichen Analyse des veränderlichen Druckwellensignals kann bei ausreichend hoher zeitlicher Auflösung die Anzahl dieser Fehlstellen ermittelt werden. Aus der hieraus resultierenden Verteilung der Fehlstellen in der Grenzfläche 7 lässt sich ein Wert einer Porosität ableiten. Bei diesem Porositätswert handelt es sich um einen auf einen Idealfall bezogenen Wert, wobei der Idealfall eine Schicht 2 ohne Fehlstellen sowie eine Grenzfläche 7 ohne Fehlstellen zwischen Schicht und Substrat darstellt. Für einen solchen Idealfall lässt sich ein Druckwellensignal bestimmen, bei dem eine Schwächung der Transmission lediglich durch den Wechsel der Materialien (Schicht 2 zu Substrat 1) bedingt ist. Neben dieser Berechnung eines Porositätswertes liegt der Vorteil des geschilderten Verfahrens jedoch insbesondere darin, Anzahl, Lage und Größe der Fehlstellen bestimmen zu können.

Der in Figur 1 gezeigte Versuchsaufbau zur Ermittlung der Porosität kann nun in lateraler Richtung der Probe 10 verschoben und die Porosität an anderen Probenstellen ermittelt werden. Es lässt sich somit eine Karte der Fehlstellen und der hieraus ermittelten Porositäts- und/oder Haftzugfestigkeitswerten erstellen.

Der in Figur 1 dargestellte Versuchsaufbau kann durch geringe Modifikation für die Detektion reflektierter Druckwellen erweitert oder abgeändert werden. Hierzu wird der Schallgeber 6 zur Erzeugung einer Druckwelle zusammen mit den piezoelektrischen Sensoren 5 an der Substratunterseite 3 angebracht. Alternativ ist selbstverständlich auch eine Anordnung auf der Schichtoberfläche 4 denkbar. Schließlich kann die Funktion des Schallgebers 6 auch durch ein entsprechendes piezoelektrisches Element 5 übernommen werden, das dann zunächst zur Erzeugung einer Druckwelle dient und anschließend die an der Grenzfläche 7 reflektierte Druckwelle detektiert.

Weitere Modifikationen des in Figur 1 dargestellten Versuchsaufbaus liegen im Griffbereich des Fachmanns und sollen ausdrücklich von vorliegender Offenbarung umfasst sein, ohne den Rahmen der Erfindung zu verlassen.

### Bezugszeichenliste

- 1: Substrat
- 2: Schicht
- 3: Substratoberfläche, Substratunterseite
- 4: Schichtoberfläche
- 5: piezoelektrischer Sensor
- 6: Schallgeber
- 7: Grenzfläche Schicht/Substrat
- 8: Auswerteeinheit
- 10: Probe

## Patentansprüche

1. Verfahren zur Ermittlung einer Porosität einer auf ein Substrat (1) aufgebrachten Schicht (2), wobei an der Schichtoberfläche (4) und/oder an der der Schicht abgewandten Substratoberfläche (3) eine Druckwelle erzeugt und der reflektierte und/oder der transmittierte Anteil dieser Druckwelle detektiert wird.

2. Verfahren nach Anspruch 1, **dadurch gekennzeichnet, dass** die Druckwelle mittels einer mechanischen Anregung oder mittels eines Laserpulses, insbesondere mit Pulslängen im Nanosekundenbereich oder darunter, erzeugt wird.

3. Verfahren nach Anspruch 1 oder 2, **dadurch gekennzeichnet, dass** der reflektierte und/oder transmittierte Anteil der Druckwelle mittels zumindest eines piezoelektrischen Sensors (5) detektiert wird.

4. Verfahren nach Anspruch 1 oder 2, **dadurch gekennzeichnet, dass** der reflektierte und/oder transmittierte Anteil der Stoßwelle mittels Interferometrie oder Aufnahme der Oberfläche durch eine Streak-Kamera detektiert wird.

5. Verfahren nach einem der Ansprüche 1 bis 3, **dadurch gekennzeichnet, dass** sowohl zur Detektion als auch zur Erzeugung der Druckwelle ein insbesondere piezoelektrischer Schallgeber (6) verwendet wird.

6. Verfahren nach einem der Ansprüche 1 bis 5, **dadurch gekennzeichnet, dass** eine räumliche und/oder zeitliche Detektion des detektierten Druckwellenanteils vorgenommen wird.

7. Verfahren nach einem der vorhergehenden Ansprüche, **dadurch gekennzeichnet, dass** aus dem detektierten Druckwellenanteil ein Druckwellensignal erzeugt wird.

8. Verfahren nach Anspruch 6 und 7, **dadurch gekennzeichnet, dass** aus einer zeitlichen Veränderung des Druckwellensignals die Anzahl, aus der räumlichen Veränderung des Druckwellensignals die Positionen und/oder Größen von Fehlstellen in der Grenzfläche (7) Schicht/Substrat ermittelt werden.

9. Verfahren nach einem der vorhergehenden Ansprüche, **dadurch gekennzeichnet, dass** als Druckwelle eine Stoßwelle verwendet wird.

10. Verwendung eines Verfahrens gemäß einem der vorhergehenden Ansprüche zur Ermittlung der Porosität und/oder Haftzugfestigkeit bei thermisch gespritzten Schichten.
